(19) Europäisches Patentamt
European Patent Office
Office européen des brevets

(11) **EP 4 456 359 A1**

(12) **EUROPEAN PATENT APPLICATION**

(43) Date of publication:
**30.10.2024 Bulletin 2024/44**

(21) Application number: **23178754.0**

(22) Date of filing: **12.06.2023**

(51) International Patent Classification (IPC):
*H02H 3/40* *(2006.01)*

(52) Cooperative Patent Classification (CPC):
**H02H 3/40; H02H 3/405;** H02H 3/42

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2023 IN 202341030616**

(71) Applicant: **Hitachi Energy Ltd 8050 Zürich (CH)**

(72) Inventors:
• **NAIDU, Obbalareddi Demudu**
  **560087 Karnataka (IN)**
• **GEORGE, Neethu**
  **560049 Karnataka (IN)**
• **PRADHAN, Vedanta**
  **751024 Bhubaneswar (IN)**

(74) Representative: **Vossius & Partner Patentanwälte Rechtsanwälte mbB Siebertstraße 3 81675 München (DE)**

(54) **METHOD AND SYSTEM FOR ADAPTIVELY OBTAINING A CORRECTED APPARENT IMPEDANCE**

(57)    The present disclosure relates to a method for adaptively obtaining a corrected apparent impedance. The method comprises acquiring a current measurement and a voltage measurement in the power grid at the time of a fault, acquiring at least one line impedance parameter, obtaining a fault type, and adaptively obtaining a corrected apparent impedance dependent on the obtained fault type.

**Fig. 3A**

**Description**

According to renewables 2021 report [1], the contribution of renewable energy resources to the increase in global power capacity is projected to be almost 95% by 2026. Renewable energy plants which are interfaced to the grid through converters have different fault current characteristics compared to synchronous generators. Control strategies employed in inverter based renewable resources (IBRs), to satisfy grid codes (GCs) and fault ride through requirements, result in modulated voltage and current during faults. The peculiar fault current characteristics of IBRs have significant impact on performance of existing distance protection and fault location for lines connecting such plants to the grid [2]. During faults, the controlled phase angle of IBR output current results in system non-homogeneity. This in turn causes large error in the apparent impedance calculation, especially for ohmic faults. The resultant over-reach or under-reach compromises the reliability of protection [2] and introduces larger error in single ended fault locator [2].

The challenges posed by introduction of IBR to the performance of traditional distance protection has been well studied in literature. Several approaches, including fixed zone setting based, adaptive zone setting based, communication assisted, modified control-based and neural network-based solutions, have been explored. Improved distance relaying techniques have been proposed in [3] - [5] by calculating faulted section impedance to compensate for the effect of fault resistance in the presence of remote infeed. However, these either ignore the equivalent source impedance of each end of a protected line or consider them to be homogeneous to the line impedance. This is however not true for IBR-connected systems. Improved communication assisted tripping schemes are proposed in [6], [7] for the lines emanating from IBR. However, they have latency issues associated with protection decisions and there is no solution in case of communication failure. A control-based solution is provided in [8], which regulates the fault current angle from IBR imitating the characteristics of synchronous generator. However, it is difficult to be generalized for different renewable plants with various control schemes.

Therefore, there is a need for reliable improved line distance protection and fault locator solutions for modern power grids integrated with IBRs. The approaches discussed in the prior art have limitations when applied in isolation. This invention proposes a system and method for distance element and fault location for power lines connected to IBR systems. In an embodiment, the proposed solution adaptively computes the relay impedance depending on the dynamic response of the IBR to the fault of concern and an estimate of the non-homogeneity angle or the angle of deviation between the local current and the fault current.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a method for adaptively obtaining a corrected apparent impedance. The method comprises acquiring a current measurement and a voltage measurement in the power grid at the time of a fault, acquiring at least one line impedance parameter, obtaining a fault type, and adaptively obtaining a corrected apparent impedance dependent on the obtained fault type.

Various embodiments may preferably implement the following features.

Preferably, the current and/or voltage measurement(s) is/are acquired locally, preferably at a relay, preferably at an inverter-based renewable resource, preferably at a point of coupling of an inverter-based renewable resource and a main grid.

Preferably, the fault type is a phase to ground fault, or a phase to phase fault.

Preferably, the phase to phase fault comprises a phase to phase fault including ground or a phase to phase fault not including ground.

Preferably, the corrected apparent impedance is adaptively calculated dependent on a magnitude of a local zero sequence current. Preferably, the local current is a relay current depending on a fault loop.

Preferably, if the fault type is a phase to ground fault, an angle of a fault current is calculated for calculating the corrected apparent impedance.

Preferably, if the fault type is a phase to ground fault and the magnitude of the local zero sequence current or voltage is above a predetermined threshold, the angle of the fault current is calculated using zero sequence current or voltage quantities.

Preferably, if the fault type is a phase to ground fault and the magnitude of the local zero sequence current or voltage is below a predetermined threshold and if a magnitude of a negative sequence current is above a predetermined threshold, the angle of the fault current is calculated using negative sequence current or voltage quantities.

Preferably, if the fault type is a phase to ground fault and the magnitude of the local zero sequence current is below a predetermined threshold and if a magnitude of a negative sequence current is below a predetermined threshold, the angle of the fault current is calculated using positive sequence quantities.

Preferably, a non-homogeneity angle is calculated, and the corrected apparent impedance is calculated using the non-homogeneity angle.

Preferably, if the fault type is a phase to phase fault, an angle of a fault current is calculated if the magnitude of the local zero sequence current is below a predetermined threshold, and the corrected apparent impedance is calculated using the angle of the fault current.

Preferably, if the fault type is a phase to phase fault and the magnitude of the local zero sequence current is above a predetermined threshold, the corrected apparent impedance is calculated using zero sequence quantities.

Preferably, if the fault type is a phase to phase fault and the magnitude of the local zero sequence current is below a predetermined threshold and if a magnitude of a negative sequence current is above a predetermined threshold, the angle of the fault current is calculated using negative sequence quantities.

Preferably, if the fault type is a phase to phase fault and the magnitude of the local zero sequence current is below a predetermined threshold and if a magnitude of a negative sequence current is below a predetermined threshold, the angle of the fault current is calculated using positive sequence quantities.

Preferably, a non-homogeneity angle is calculated using the angle of the fault current if the magnitude of the local zero sequence current is below a predetermined threshold, and the corrected apparent impedance is calculated using the non-homogeneity angle.

Preferably, the non-homogeneity angle is an angle of deviation between an angle of a local current and the angle of the fault current.

Preferably, the local current is a relay current depending on a fault loop.

The present disclosure further relates to a device for adaptively obtaining a corrected apparent impedance, wherein the device comprises a processor configured to perform the method as described above.

The present disclosure further relates to a system for adaptively obtaining a corrected apparent impedance comprising a device as described above and an intelligent electronic device, IED, connected to the device.

Preferably, the IED is connected to a power grid comprising inverter-based renewable, IBR, energy sources.

Other aspects, features, and advantages will be apparent from the summary above, as well as from the description that follows, including the figures and the claims.

Fig. 1 shows a schematic diagram of a distance element according to an embodiment of the present disclosure.
Fig. 2 shows an IBR connected exemplary transmission line test system according to an embodiment of the present disclosure.
Figs. 3A and 3B show phasor diagrams indicating over-reach and under-reach in a fault case.
Fig. 4 shows a post fault zero-sequence equivalent network.
Fig. 5 shows a post fault negative-sequence equivalent network.
Fig. 6 shows a pure-fault positive sequence equivalent network.
Fig. 7A shows a flow chart of distance protection for a phase to ground fault according to an embodiment and Fig. 7B shows a flow chart of distance protection for a phase to phase fault according to an embodiment.

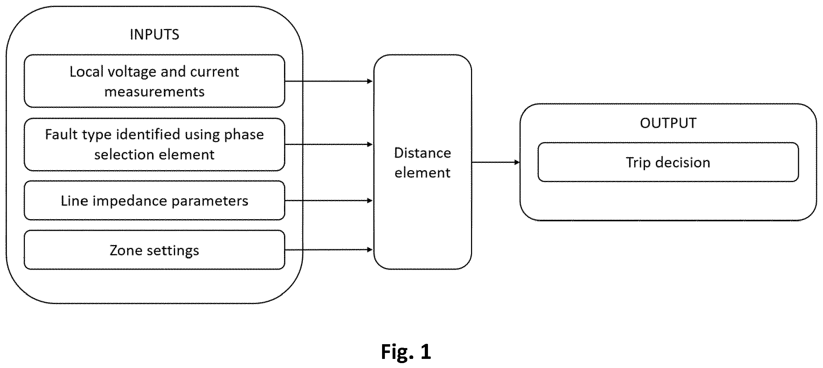

An exemplary design of the proposed distance element indicating the inputs and output is shown in Fig. 1. In particular, the inputs may comprise at least one of local voltage and/or current measurements, a fault type, wherein the fault type may be identified using a phase selection element, line impedance parameters or zone settings. The proposed distance element estimates the non-homogeneity angle using local measurements and line impedance parameters and uses the same to correct the apparent impedance. Based on the calculations, a trip decision is made.

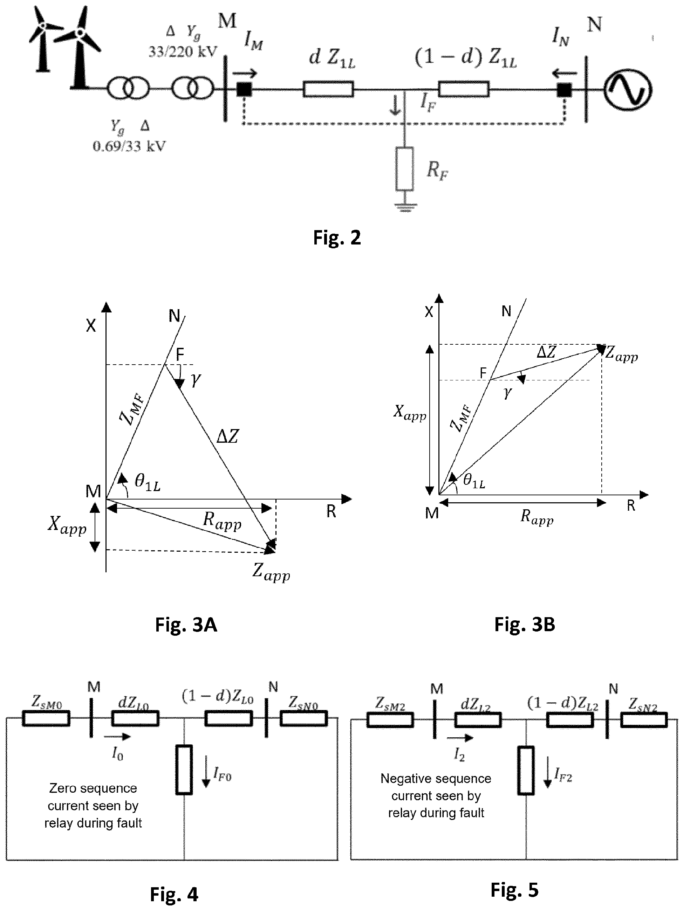

Fig. 2 shows an IBR, exemplarily depicted as a wind energy plant, connected to a transmission line. Between the connection points M and N (busses), currents $I_M$ and $I_N$, a line impedance $Z_{1L}$, a fault current $I_F$ and a fault resistance $R_F$ is measured.

Figs. 3A and 3B present phasor diagrams demonstrating the over-reach (Fig. 3A) and under-reach (Fig. 3B) issues respectively, associated with a distance relay at a bus M as outlined above. Therein, $\theta_{1L}$ represents the angle of the positive sequence line impedance $Z_{1L}$. $R_{app}$ (real part of $Z_{app}$) and $X_{app}$ (imaginary part of $Z_{app}$) are the apparent resistance and reactance associated with $Z_{app}$ calculated by the traditional reach element of the distance relay. $\Delta Z$ is the error in the calculated apparent impedance, due to the non-homogeneity angle, $\gamma$. Moreover, $Z_{MF} = d_{Z1L}$ is the actual faulted impedance. According to the present disclosure, $Z_{app}$, is corrected by removing the error term $\Delta Z$, to obtain $Z_{MF}$.

By using the geometric property, the non-homogeneity angle $\gamma$ can be expressed as

$$\gamma = \tan^{-1}\left(\frac{|Z_{MF}|\sin\theta_{1L} - X_{app}}{|Z_{MF}|\cos\theta_{1L} - R_{app}}\right) \qquad (1)$$

and $Z_{MF}$, with an angle that is the same as the line impedance angle, can be obtained as follows

$$Z_{app}^{corr} = Z_{MF} = \frac{X_{app} - R_{app}\tan(\gamma)}{\sin(\theta_{1L}) - \cos(\theta_{1L})\tan(\gamma)}(\cos(\theta_{1L}) + j\sin(\theta_{1L})) \tag{2}$$

Therein,

$$\gamma = \angle\left(\frac{I_F}{I_{rM}}R_F\right) = \angle\left(\frac{I_F}{I_{rM}}\right) \tag{3}$$

where $I_F$ is the fault current and $I_{rM}$ is the relay measured fault loop current. In equation (3), $R_F$ is ignored as it is real valued and has a phase angle of zero. For each fault type, $\gamma$ can be calculated by calculating the fault current $I_F$ for the particular fault type. The following sub-sections describe how $I_F$ and, consequently $\gamma$ and the corrected apparent impedance, $Z_{app}^{corr}$ can be calculated for each fault type. In the following two sub-sections, the calculations for phase-ground and phase-phase loops (including ground and not including ground) are explained.

In the proposed method, regarding the determination which sequence quantity is to be used for the calculation of $\angle I_F$, a particular priority order may be followed for all fault types. The first priority may go to zero sequence quantities, if sufficient magnitude is available. This is because for the most common transformer configuration at the point of common coupling (PCC, in Fig. 2 delta - star grounded, with delta winding towards CIRPP (converter interfaced renewable power plants) and star-grounded towards the PCC), the zero-sequence current is independent of the CIRPP configuration or control strategy, owing to the transformer connection. The second priority may go to negative sequence quantities if sufficient magnitude is available. Finally, if the zero and negative sequence quantities are not of sufficient magnitude, positive sequence quantities are utilised.

The method will be described in further detail below. The fault type may be provided as an input, i.e., externally provided.

Phase to ground loop

This section will cover the calculation of $Z_{app}^{corr}$ for phase to ground faults and three phase faults. The equations are derived considering a phase A to ground fault but are equally valid for the other phases. The adaptive determination of the corrected apparent impedance may be based on a magnitude of the local zero sequence current or voltage. Below, reference is only made to the local zero sequence current but this may be replaced or complemented by considering the magnitude of the local zero sequence voltage.

In a first step, the angle $\angle I_F$ of the fault current is calculated. If a magnitude of a zero sequence local current is greater than a set threshold (condition 1), the equivalent zero sequence network (as shown in Fig. 4) may be utilised to calculate $\angle I_F$. The threshold may be $\in = x * I_{base}$, where $I_{base}$ is the rated current and $0.05 \leq x \leq 0.15$. In an embodiment, x may be 0.05.

For phase-ground faults, from, Fig. 4 using current distribution property, the following relation can be written

$$I_{F0} = I_0\left(\frac{Z_{sM0} + Z_{L0} + Z_{sN0}}{(1-d)Z_{L0} + Z_{sN0}}\right) \tag{4}$$

where $Z_{sM0}$, $Z_{sN0}$ and $Z_{L0}$ are zero sequence local source impedance, remote source impedance and line impedance respectively, d is the fractional fault location and $I_0$ is the local zero sequence current. Here, the angles of $Z_{sM0}$, $Z_{sN0}$ and $Z_{L0}$ can be assumed to be very close to each other, and hence the angle of $I_{F0}$ can be equated to the angle of $I_0$. Thus, the angle of the total fault current can be written as

$$\angle I_F = \angle I_{F0} = \angle I_0 \tag{5}$$

If the magnitude of the zero sequence current is less than the threshold E (condition 2), it is determined whether a significant magnitude of negative sequence current is available. If the magnitude of the negative sequence local current is greater than the threshold, $\angle I_F$ is calculated utilising negative sequence quantities. The threshold may be $\Delta = y * I_{base}$, where $I_{base}$ is the rated current and $0.05 \leq y \leq 0.15$. In an embodiment, y may be 0.05

For phase to ground faults, using the post fault negative-sequence equivalent network shown in Fig. 5, using the current distribution property, the following relation can be written

$$I_{F2} = I_2 \left( \frac{Z_{sM2} + Z_{L2} + Z_{sN2}}{(1-d)Z_{L2} + Z_{sN2}} \right) \qquad (6)$$

Therein, $Z_{sM2}$, $Z_{sN2}$ and $Z_{L2}$ are negative sequence local source impedance, remote source impedance and line impedance respectively, d is the fractional fault location and $I_2$ is the local negative sequence current. Now, using the assumptions that $|Z_{sM2}| \gg |Z_{sN2}|$ (since CIRPPs are weak sources) and that the angle of $Z_{sN2}$ is very close to the angle of $Z_{L2}$ due to a homogeneity between the grid source impedance and line impedance, the following expression can be obtained for $\angle I_{F2}$ from equation (6)

$$\angle I_{F2} = \angle \left( I_2 \left( 1 + \frac{Z_{sM2}}{Z_{L2}} \right) \right) \qquad (7)$$

wherein the local negative sequence source equivalent is calculated as $Z_{sM2} = \frac{-V_2}{I_2}$ .

From equation (7), the angle of the fault current $\angle I_F$ can be obtained as

$$\angle I_F = \angle I_{F2} = \angle \left( I_2 \left( 1 + \frac{Z_{sM2}}{Z_{L2}} \right) \right) \qquad (8)$$

If the magnitude of the zero sequence current is less than the threshold E, and the magnitude of negative sequence current is less than the threshold $\Delta$ (condition 3), the local positive sequence quantities are used to calculate $\angle I_F$.

For phase to ground faults, total fault current is proportional to positive sequence fault current,

$$I_F = 3I_{F1} \qquad (9)$$

The local positive sequence source equivalent may be calculated as

$$Z_{sM1} = \frac{-\left(V_1 - V_1^{pre}\right)}{\left(I_1 - I_1^{pre}\right)} \qquad (10)$$

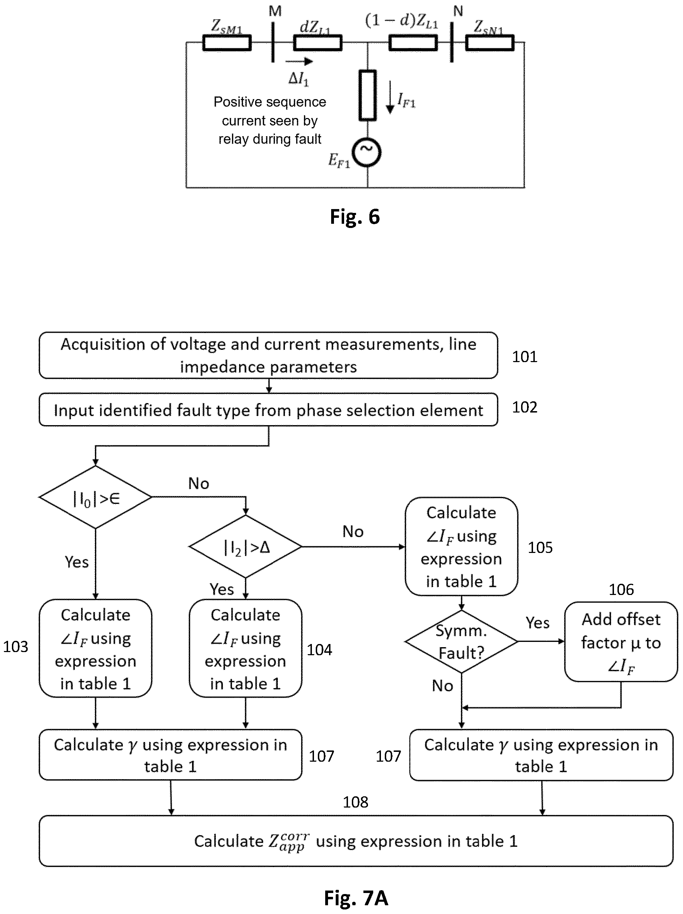

Using derivations similar to the negative sequence, equation (11) using positive sequence quantities is obtained (see also Fig. 6)

$$\angle I_F = \angle I_{F1} = \angle \left( \Delta I_1 \left( 1 + \frac{Z_{sM1}}{Z_{L1}} \right) \right) \qquad (11)$$

Therein, $I_1^{pre}$, $V_1^{pre}$ are the pre-fault positive sequence local current and voltage, respectively, $I_1$, $I_2$, and $I_0$ are the positive, negative and zero sequence currents, respectively, and $V_1$, $V_2$, and $V_0$ are the positive, negative and zero sequence voltages, respectively.

In a second step, the non-homogeneity angle $\gamma$ may be calculated. At this stage, the input from the phase selection element is checked to see if the fault is a three-phase fault. If the fault is identified as a three-phase fault, an offset factor, $\mu$ may be added, wherein $5° \le \mu \le 10°$, and in an embodiment, $\mu = 7°$. After calculation of the angle of the fault current, $I_F$, the non-homogeneity angle for a phase A to ground fault can be calculated using the below

$$\gamma = \angle I_F - \angle(I_a + k_0 I_0) \tag{12}$$

relation (12)
wherein $I_a$, $I_b$, and $I_c$ are phase A, phase B and phase C currents, respectively, and equation (12) can be used for all phases by substituting $I_a$ with the respective phase current $I_b$ or $I_c$.

The respective apparent impedance can be calculated using

$$Z_{app} = \frac{V_a}{I_a + k_0 I_0}$$

or $V_b$, $I_b$, $V_c$, $I_c$, respectively.

In a third step, the corrected apparent impedance $Z_{app}^{corr}$ can be calculated.

Once the non-homogeneity angle $\gamma$ is calculated, the corrected apparent impedance can be calculated using equation (2). Therein, $X_{app} = imag(Z_{app})$, $R_{app} = real(Z_{app})$ and $\theta_{1L} = \angle Z_{1L}$.

Similarly, expressions for other phase to ground faults may be derived from the above and are given in Table 1 below.

Phase to phase loop

Herein, the phase to phase loop or phase to phase faults may comprise both a phase to phase fault including ground and a phase to phase fault not including ground.

This section will cover the calculation of $Z_{app}^{corr}$ for phase-to-phase and phase-to-phase-to-ground faults. The equations are derived considering a phase A to B fault. The corresponding equations for the rest of the fault types can be obtained from Table 2 and derived in a similar manner.

In a first step, the angle of the fault current $\angle I_F$ is calculated. If the magnitude of the zero sequence local current is greater than a set threshold (condition 1), e.g., $\in = x * I_{base}$ (see above), the $Z_{app}^{corr}$ for the phase-to-phase loop is to be calculated using the $Z_{app}$ of individual phase-to-ground loops.

For a phase A to B fault in condition 1, $Z_{app}^{corr}$ is calculated as follows.

$$Z_{app}^{corr} = 0.5 \left( \frac{V_a}{I_a + k_0 I_0} + \frac{V_b}{I_b + k_0 I_0} \right) \tag{13}$$

The formula equally applies to phase B to C or phase C to A faults by inserting the respective voltages and currents.

If the magnitude of the zero sequence local current is less than the threshold E (condition 2), it is determined whether a significant magnitude of negative sequence current is available. If the magnitude of the negative sequence local current is greater than a threshold, e.g., $\Delta = y * I_{base}$ (see above), $\angle I_F$ is calculated utilising negative sequence quantities.

For phase-to-phase-to-ground / phase-to-phase faults, when the zero sequence current is not available, $\angle I_F$ can be written as in equation (14). The equation is derived from Fig. 5 (same as for phase to ground loops).

$$\angle I_{F2} = \angle \left( I_2 \left( 1 + \frac{Z_{sM2}}{Z_{L2}} \right) \right) \tag{14}$$

For a phase A to B fault, the angle of the fault current can be written as follows.

$$\angle I_F = \angle\big((1-a)I_{F2}\big); \quad a = 1\angle 120^0 \tag{15}$$

From equation (14) and (15), the following relation for $\angle I_F$ is obtained

$$\angle I_F = \angle\left((1-a)I_2\left(1+\frac{Z_{sM2}}{Z_{L2}}\right)\right); \quad a = 1\angle 120^0 \tag{16}$$

where $\quad Z_{sM2} = \dfrac{-(V_2)}{I_2}$

For a phase B to C fault, the factor $(1 - a)$ will be $(a - a^2)$, for a phase C to A fault $(a^2 - 1)$.

If the magnitude of the zero sequence local current is less than the set threshold 6, and magnitude of negative sequence local current is less than the threshold $\Delta$ (condition 3), positive sequence quantities are utilised to calculate $\angle I_F$.

Through similar derivations as in the case of phase to ground loops, the following can be obtained

$$I_{F1} = \Delta I_1\left(1+\frac{Z_{sM1}}{Z_{1L}}\right) \tag{17}$$

for a phase A to B fault, the angle of the fault current can be written as follows

$$\angle I_F = \angle\big((1-a^2)\Delta I_{F1}\big) \tag{18}$$

By substituting (17) in (18), the following relation for $\angle I_F$ can be obtained (A to B fault)

$$\angle I_F = \angle\left((1-a^2)\Delta I_1\left(\frac{Z_{sM1}}{Z_{1L}}\right)\right) \tag{19}$$

where $\quad Z_{sM1} = \dfrac{-(V_1-V_1^{pre})}{(I_1-I_1^{pre})}, \Delta I_1 = I_1 - I_1^{pre}$ .

For a B to C fault, the factor $(1 - a^2)$ will be $(a^2 - a)$, for a C to A fault $(a - 1)$.

Step 2 and Step 3 are similar to those for phase to ground loops, with appropriate loop voltage and current quantities.

In particular, the non-homogeneity angle for a phase A to B fault can be calculated as $\gamma = \angle I_F - \angle(I_a - I_b)$ and similar for the other faults by substituting the phase A and B currents by the respective phase currents.

The apparent impedance can be written as

$$Z_{app} = \frac{V_a - V_b}{I_a - I_b}$$

for a phase A to B fault, wherein the apparent impedance for the other faults can be calculated by substituting the voltage and current values, respectively.

For conditions 2 and 3, once the non-homogeneity angle $\gamma$ is calculated, the corrected apparent impedance can be calculated using equation (2). Therein, $X_{app} = imag(Z_{app})$, $R_{app} = real\,(Z_{app})$ and $\theta_{1L} = \angle Z_{1L}$.

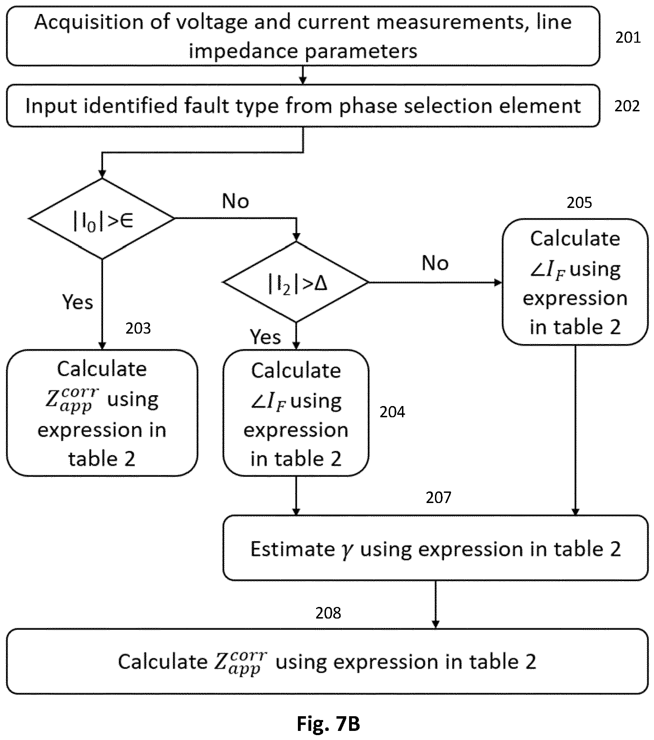

Fig. 7A shows a flow chart of a method for calculating a corrected apparent impedance for a phase to ground fault and Fig. 7B shows a flow chart of a method for calculating a corrected apparent impedance for a phase to phase fault.

As indicated above, for the calculations, $\in$ may be $x * I_{base}$, $\Delta$ may be $y * I_{base}$ and $\mu$ may be between 5° and 10°, e.g., 7°.

The term "adaptively" as used herein refers to the determination of the corrected apparent impedance $Z_{app}^{corr}$ dependent on at least one condition. As described herein and as shown in Figs. 7A and 7B, thresholds $\epsilon$, $\Delta$ for the zero sequence current and the negative sequence current $I_2$ may be set and may decide how $Z_{app}^{corr}$ is calculated. Thus, depending on the line/grid properties and the fault type, the method is adapted.

The method comprises acquiring 101, 201 a current measurement and a voltage measurement in the power grid at the time of a fault, acquiring at least one line impedance parameter, determining 102, 202 a fault type, and adaptively obtaining a corrected apparent impedance $Z_{app}^{corr}$ dependent on the identified fault type. "Determining" as used herein also encompasses receiving the fault type as an input or obtaining the fault type.

In an embodiment, the current and/or voltage measurement(s) is/are acquired locally, preferably at a relay, preferably at an inverter-based renewable resource, preferably at a point of coupling of an inverter-based renewable resource and a main grid.

In an embodiment, the fault type is a phase to ground fault, or a phase to phase fault. The phase to phase fault may comprise a phase to phase fault including ground or a phase to phase fault not including ground.

In an embodiment, the corrected apparent impedance $Z_{app}^{corr}$ is adaptively calculated 108, 208 dependent on a magnitude of a local zero sequence current $I_0$. The local current may be a relay current depending on a fault loop.

In an embodiment, if the fault type is a phase to ground fault, an angle of a fault current $\angle I_F$ is calculated 103, 104, 105 for calculating the corrected apparent impedance $Z_{app}^{corr}$.

In an embodiment, if the fault type is a phase to ground fault and the magnitude of the local zero sequence current $I_0$ is above a predetermined threshold 6, the angle of the fault current $\angle I_F$ is calculated 103 using zero sequence quantities. If the fault type is a phase to ground fault and the magnitude of the local zero sequence current $I_0$ is below a predetermined threshold E and if a magnitude of a negative sequence current $I_2$ is above a predetermined threshold $\Delta$, the angle of the fault current $\angle I_F$ is calculated 104 using negative sequence quantities. If the fault type is a phase to ground fault and the magnitude of the local zero sequence current $I_0$ is below a predetermined threshold E and if a magnitude of a negative sequence current $I_2$ is below a predetermined threshold $\Delta$, the angle of the fault current $\angle I_F$ is calculated 105 using positive sequence quantities.

In an embodiment, a non-homogeneity angle $\gamma$ is calculated 107, and the corrected apparent impedance $Z_{app}^{corr}$ is calculated 108 using the non-homogeneity angle $\gamma$.

In case the angle of the fault current $\angle I_F$ is calculated using positive sequence quantities, it may further be determined whether the fault is symmetrical. In case the fault is symmetrical, an offset factor $\mu$ as described herein may be added 106.

In an embodiment, if the fault type is a phase to phase fault, an angle of a fault current $\angle I_F$ is calculated 204, 205 if the magnitude of the local zero sequence current $I_0$ is below a predetermined threshold E, and the corrected apparent impedance $Z_{app}^{corr}$ is calculated 208 using the angle of the fault current $\angle I_F$.

In an embodiment, if the fault type is a phase to phase fault and the magnitude of the local zero sequence current $I_0$ is above a predetermined threshold 6, the corrected apparent impedance $Z_{app}^{corr}$ is calculated 203 using zero sequence quantities. If the fault type is a phase to phase fault and the magnitude of the local zero sequence current $I_0$ is below a predetermined threshold E and if a magnitude of a negative sequence current $I_2$ is above a predetermined threshold $\Delta$, the angle of the fault current $\angle I_F$ is calculated 204 using negative sequence quantities. If the fault type is a phase to phase fault and the magnitude of the local zero sequence current $I_0$ is below a predetermined threshold E and if a magnitude of a negative sequence current $I_2$ is below a predetermined threshold $\Delta$, the angle of the fault current $\angle I_F$ is calculated 205 using positive sequence quantities.

In an embodiment, a non-homogeneity angle $\gamma$ is calculated 207 using the angle of the fault current $\angle I_F$ if the magnitude of the local zero sequence current $I_0$ is below a predetermined threshold $\epsilon$, and the corrected apparent impedance $Z_{app}^{corr}$ is calculated 208 using the non-homogeneity angle $\gamma$.

In an embodiment, the non-homogeneity angle $\gamma$ is an angle of deviation between an angle of a local current and the angle of the fault current $\angle I_F$, wherein the local current is preferably a relay current depending on a fault loop.

The present disclosure further relates to a device for adaptively obtaining a corrected apparent impedance $Z_{app}^{corr}$. The device comprises at least one processor configured to perform the method as described above.

The present disclosure also relates to a system for adaptively obtaining a corrected apparent impedance $Z_{app}^{corr}$ comprising a device as above and an intelligent electronic device (IED) connected to the device.

In an embodiment, the IED is connected to a power grid comprising inverter-based renewable, IBR, energy sources.

Table 1

| Loop/ fault | Condition | $\angle I_F$ | | g | $Z_{app}$ | $Z_{app}^{corr}$ |
|---|---|---|---|---|---|---|
| **Ag** | If $|I_0|>\in$ | $\angle I_0$ | | $\angle I_F - \angle(I_a + k_0 I_0)$ | $\dfrac{V_a}{I_a + k_0 I_0}$ | $\dfrac{X_{app} - R_{app}\tan\gamma}{\sin\theta_{1L} - \cos\theta_{1L}\tan\gamma} \cdot$ $(\cos\theta_{1L} + j\sin\theta_{1L})$ where $X_{app} = imag(Z_{app})$ $R_{app} = real(Z_{app})$ $\theta_{1L} = \angle Z_{1L}$ |
| | If $|I_2|>D$ | $\angle\left(I_2\left(1 + \dfrac{Z_{sM2}}{Z_{L2}}\right)\right)$ $Z_{sM2} = \dfrac{-(V_2)}{I_2}$  where | | | | |
| | else | $\angle\left(\Delta I_1\left(1 + \dfrac{Z_{sM1}}{Z_{L1}}\right)\right)$ where $Z_{sM1} = \dfrac{-(V_1 - V_1^{pre})}{(I_1 - I_1^{pre})},$ $\Delta I_1 = I_1 - I_1^{pre}$ | | | | |
| | | Note: if a 3 phase fault is identified, the offset factor $\mu$ is added to $\angle I_F$ at this step | | | | |

(continued)

| Loop/ fault | Condition | $\angle I_F$ | | | g | $Z_{app}$ | $Z_{app}^{corr}$ |
|---|---|---|---|---|---|---|---|
| **Bg** | If $\|I_0\|>\epsilon$ | $\angle I_0$ | | | $\angle I_F -$ $\angle(I_b +$ $k_0 I_0)$ | $\dfrac{V_b}{I_b + k_0 I_0}$ | $\dfrac{X_{app} - R_{app} \tan\gamma}{\sin\theta_{1L} - \cos\theta_{1L}\tan\gamma} \cdot$ $(\cos\theta_{1L} + j\sin\theta_{1L})$ where $X_{app} = imag(Z_{app})$ $R_{app} = real(Z_{app})$ $\theta_{1L} = \angle Z_{1L}$ |
| | If $\|I_2\|>D$ | $\angle\left(aI_2\left(1 + \dfrac{Z_{sM2}}{Z_{L2}}\right)\right)$ $Z_{sM2} = \dfrac{-(V_2)}{I_2}$ where | | | | | |
| | else | $\angle\left(a^2\Delta I_1\left(1 + \dfrac{Z_{sM1}}{Z_{L1}}\right)\right)$ where $Z_{sM1} = \dfrac{-(V_1 - V_1^{pre})}{(I_1 - I_1^{pre})},$ $\Delta I_1 = I_1 - I_1^{pre}$ Note: if a 3 phase fault is identified, the offset factor $\mu$ is added to $\angle I_F$ at this step | | | | | |
| **Cg** | If $\|I_0\|>\epsilon$ | $\angle I_0$ | | | | | |

| Loop/ fault | Condition | $\angle I_F$ | | g | $Z_{app}$ | $Z_{app}^{corr}$ |
|---|---|---|---|---|---|---|
| EP 4 456 359 A1 | If $|I_2|>D$ | $\angle\left(a^2 I_2\left(1+\dfrac{Z_{sM2}}{Z_{L2}}\right)\right)$ <br><br> $Z_{sM2}=\dfrac{-(V_2)}{I_2}$ where | | $\angle I_F - \angle(I_c + k_0 I_0)$ | $\dfrac{V_c}{I_c + k_0 I_0}$ | $\dfrac{X_{app}-R_{app}\tan\gamma}{\sin\theta_{1L}-\cos\theta_{1L}\tan\gamma}\cdot$ <br><br> $(\cos\theta_{1L}+j\sin\theta_{1L})$ <br><br> where <br><br> $X_{app}=imag\left(Z_{app}\right)$ <br><br> $R_{app}=real\left(Z_{app}\right)$ <br><br> $\theta_{1L}=\angle Z_{1L}$ |
| | else | $\angle\left(a\Delta I_1\left(1+\dfrac{Z_{sM1}}{Z_{L1}}\right)\right)$ <br><br> where <br><br> $Z_{sM1}=\dfrac{-(V_1-V_1^{pre})}{(I_1-I_1^{pre})},$ <br><br> $\Delta I_1 = I_1 - I_1^{pre}$ <br><br> Note: if a 3 phase fault is identified, the offset factor $\mu$ is added to $\angle I_F$ at this step | | | | |

Table 2

| Loop/ fault | Condition | $\angle I_F$ | g | $Z_{app}$ | $Z_{app}^{corr}$ |
|---|---|---|---|---|---|
| **AB** | If $\|I_0\| > \in$ | - | - | - | $0.5 \left( \dfrac{V_a}{I_a + k_0 I_0} + \dfrac{V_b}{I_b + k_0 I_0} \right)$ |
| | If $\|I_2\| > D$ | $\angle \left( (1-a) I_2 \left( 1 + \dfrac{Z_{sM2}}{Z_{L2}} \right) \right)$ $Z_{sM2} = \dfrac{-(V_2)}{I_2}$ where | $\angle I_F - \angle(I_a - I_b)$ | $\dfrac{V_a - V_b}{I_a - I_b}$ | $\dfrac{X_{app} - R_{app} \tan \gamma}{\sin \theta_{1L} - \cos \theta_{1L} \tan \gamma} \cdot$ $(\cos \theta_{1L} + j \sin \theta_{1L})$ where $X_{app} = imag(Z_{app})$ $R_{app} = real(Z_{app})$ $\theta_{1L} = \angle Z_{1L}$ |
| | else | $\angle \left( (1 - a^2) \Delta I_1 \left( \dfrac{Z_{sM1}}{Z_{1L}} \right) \right)$ where $Z_{sM1} = \dfrac{-(V_1 - V_1^{pre})}{(I_1 - I_1^{pre})},$ $\Delta I_1 = I_1 - I_1^{pre}$ | | | |

EP 4 456 359 A1

| Loop/ fault | Condition | $\angle I_F$ | g | $Z_{app}$ | $Z_{app}^{corr}$ |
|---|---|---|---|---|---|
| BC | If $\lvert I_0\rvert > \in$ | - | - | - | $0.5\left(\dfrac{V_b}{I_b + k_0 I_0} + \dfrac{V_c}{I_c + k_0 I_0}\right)$ |
| | If $\lvert I_2\rvert > D$ | $\angle\left((a-a^2)I_2\left(1+\dfrac{Z_{sM2}}{Z_{L2}}\right)\right)$ $Z_{sM2} = \dfrac{-(V_2)}{I_2}$ where | $\angle I_F - \angle(I_b - I_c)$ | $\dfrac{V_b - V_c}{I_b - I_c}$ | $\dfrac{X_{app} - R_{app}\tan\gamma}{\sin\theta_{1L} - \cos\theta_{1L}\tan\gamma}\cdot$ $(\cos\theta_{1L} + j\sin\theta_{1L})$ where $X_{app} = imag(Z_{app})$ $R_{app} = real(Z_{app})$ $\theta_{1L} = \angle Z_{1L}$ |
| | else | $\angle\left((a^2 - a)\Delta I_1\left(\dfrac{Z_{sM1}}{Z_{1L}}\right)\right)$ where $Z_{sM1} = \dfrac{-(V_1 - V_1^{pre})}{(I_1 - I_1^{pre})}$, $\Delta I_1 = I_1 - I_1^{pre}$ | | | |
| CA | If $\lvert I_0\rvert > \in$ | - | - | - | $0.5\left(\dfrac{V_c}{I_c + k_0 I_0} + \dfrac{V_a}{I_a + k_0 I_0}\right)$ |
| | If $\lvert I_2\rvert > D$ | $\angle\left((a^2 - 1)I_2\left(1+\dfrac{Z_{sM2}}{Z_{L2}}\right)\right)$ $Z_{sM2} = \dfrac{-(V_2)}{I_2}$ where | $\angle I_F - \angle(I_c - I_a)$ | $\dfrac{V_c - V_a}{I_c - I_a}$ | $\dfrac{X_{app} - R_{app}\tan\gamma}{\sin\theta_{1L} - \cos\theta_{1L}\tan\gamma}\cdot$ $(\cos\theta_{1L} + j\sin\theta_{1L})$ |

EP 4 456 359 A1

14

| Loop/ fault | Condition | $\angle I_F$ | g | $Z_{app}$ | $Z_{app}^{corr}$ |
|---|---|---|---|---|---|
|  | else | $\angle\left((a-1)\Delta I_1\left(\dfrac{Z_{sM1}}{Z_{1L}}\right)\right)$ <br><br> where <br><br> $Z_{sM1} = \dfrac{-(V_1 - V_1^{pre})}{(I_1 - I_1^{pre})},$ <br><br> $\Delta I_1 = I_1 - I_1^{pre}$ |  |  | where <br><br> $X_{app} = imag(Z_{app})$ <br><br> $R_{app} = real(Z_{app})$ <br><br> $\theta_{1L} = \angle Z_{1L}$ |

The method as described herein has been simulated and validated with field data.

Therefore, a two-terminal 100 km long transmission line system connected to a 200 MW Type IV wind turbine generator-based wind farm as shown in Fig. 2 has been considered. Fault Ride Through (FRT) capability following a slope of reactive power injection of k=10, and approximately k=2.5, respectively, have been implemented, wherein k denotes the grid code. In comparison, the wind generator following k=10 will inject more reactive power than the generator following k=2.5 for the same fault. It is demonstrated below how these two different values of k impact the performance of traditional distance and the performance of the proposed method for the same.

The test case was an AB-g fault at 50% of the line, Rf 10$\Omega$

Case 1: Fault with IBR following grid code k=10

Case 2: Fault with IBR following grid code k=2.5

The first line shows voltage and current waveforms over time of a three phase system when a fault occurs. The second line shows the active and reactive power at the PCC over time and in the third line, the change of the non-homogeneity angle $\gamma$ over time is depicted.

The fourth line shows a representative phasor diagram showing an impact on the apparent impedance and the fifth line is a comparison of the performance of a traditional distance element and a distance element according to the present disclosure.

The impedance values are provided in Table 3 below. This shows how the performance of traditional distance protection and single ended fault locator is affected by the presence of IBR. Moreover, the table shows that the impact on performance is not universal and it depends on the value of k being followed. Further, this also shows the performance of the proposed method and how it is independent of the values of k or converter control topologies.

Table 3

| | Grid code k=10 | Grid code k=2.57 |
|---|---|---|
| **Impedance till fault point ($\Omega$)** | 1.74 + $j$27.25 | 1.74 + 27.25j |
| **Traditional distance ($\Omega$)** | 100.53 + $j$45.55 | 75.04 - 25.16j |
| **Proposed method ($\Omega$)** | 1.4 + $j$28.25 | 1.73 + 28.39j |

Further, four more test cases covering different fault types, fault locations and fault resistances have been evaluated and the summary is provided in Table 4 below. Performance comparison of single ended-fault locator and the fault location obtained by the proposed method for these cases is given in Table 5.

Table 4

| Test case | Impedance till fault point ($\Omega$) | Grid code k=10 | | Grid code k=2.57 | |
|---|---|---|---|---|---|
| | | Traditional distance ($\Omega$) | Proposed method ($\Omega$) | Traditional distance ($\Omega$) | Proposed method ($\Omega$) |
| Cg fault at 5%, Rf 50$\Omega$ | 0.17 + 2.72j | 59.2 - 3.72j | 0.22 + 3.12j | 59.2 - 3.72j | 0.31 + 2.99j |
| BC-g fault at 95%, Rf 10$\Omega$ | 3.3 + 51.78j | 152.5 + 169.23j | 11.2 + 50.8j | 109.7 +1.29j | 10.3 + 52.65j |
| AB fault at 10%, Rf 5$\Omega$ | 0.34 + 5.45j | 65.18 - 0.13j | 0.4 + 6.28j | 9.3 -11.97j | 0.49 + 6.18j |
| Ag fault at 45%, Rf 50$\Omega$ | 1.56 + 24.53j | 54.09 + 17.23j | 1.56 + 24.48j | 54.09 + 17.23j | 1.56 + 24.48j |

Table 5

| Test case | Grid code k=10 | | Grid code k=2.57 | |
|---|---|---|---|---|
| | Error in fault location (%) | | Error in fault location (%) | |
| | Single ended fault locator | Proposed method | Single ended fault locator | Proposed method |
| Cg fault at 5%, Rf 50Ω | 22.2% | 0.72% | 26.1% | 0.51% |
| BC-g fault at 95%, Rf 10Ω | 19.3% | 0.22% | 22.1% | 0.56% |
| AB fault at 10%, Rf 5Ω | 12.4% | 1.5% | 11.5% | 1.43% |
| Ag fault at 45%, Rf 50Ω | 24.5% | 0.09% | 25.1% | 0.09% |

Herein, a methodology for distance protection and fault location of power lines connected to IBR systems has been proposed. The proposed methodology safeguards distance relay operation against peculiar reactance effects caused due to the non-homogeneous nature of the IBR fault response with respect to the fault infeed from the grid. The corrected impedance is used for fault location. The proposed method improves reliability of distance element and fault location accuracy.

The present disclosure encompasses a method for distance protection and fault location of power lines connected to IBR systems to safeguard its operation against peculiar reactance effects caused due to the non-homogeneous nature of the IBR fault response with respect to the fault infeed from the grid.

According to an aspect of the invention, the distance relay performance is improved in terms of its dependability and security when applied on lines connecting IBR systems.

Moreover, the proposed method does not rely only on a modification of the relay characteristic. Adaptive calculations are only internal to the scheme and do not warrant a change in marketing description of the IEDs.

The proposed method does not require any information related to the IBR control strategy and/or parameters, which are generally proprietary and not readily shared by the manufacturers. The proposed solution is agnostic to the control structure and parameters of the IBR.

It is based only on local voltage and current measurements available at the relay terminal. No communication with a remote end relay is required. Hence, it is not prone to failures associated with communication latencies and/or loss of communication.

Thereby, accurate fault location using single ended information can be provided.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

List of citations

[1] Renewables 2021, IEA, 2021

[2] Neethu George and O. D. Naidu, "Distance Protection Issues with Renewable Power Generators and Possible Solutions," 16th International Conference on Developments in Power System Protection (DPSP 2022), Mar.2022, pp. 1-6.

[3] "Line distance protection REL670 Version 2.2 ANSI Application Manual", ABB, 2018

[4] Y. Liang, Z. Lu, W. Li, W. Zha and Y. Huo, "A novel fault impedance calculation method for distance protection against fault resistance", IEEE Trans. Power Del., vol. 35, no. 1, pp. 396-407, Feb. 2020

[5] J. Ma, W. Ma, Y. Qiu and J. S. Thorp, "An adaptive distance protection scheme based on the voltage drop equation", IEEE Trans. Power Del., vol. 30, no. 4, pp. 1931-1940, Aug. 2015

[6] A. Hooshyar, M. A. Azzouz and E. F. El-Saadany, "Distance protection of lines connected to induction generator-based wind farms during balanced faults", IEEE Trans. Sustain. Energy, vol. 5, no. 4, pp. 1193-1203, Oct. 2014

[7] A. Hooshyar, M. A. Azzouz and E. F. El-Saadany, "Distance protection of lines emanating from full-scale converter-interfaced renewable energy power plants-Part II: Solution description and evaluation", IEEE Trans. Power Del., vol. 30, no. 4, pp. 1781-1791, Aug. 2015

[8] A. Banaiemoqadam, A. Hooshyar and M. A. Azzouz, "A control-based solution for distance protection of lines connected to converter-interfaced sources during asymmetrical faults", IEEE Trans. Power Del., vol. 35, no. 3, pp. 1455-1466, Jun. 2020.

**Claims**

1. Method for adaptively obtaining a corrected apparent impedance, the method comprising:

   acquiring a current measurement and a voltage measurement in the power grid at the time of a fault,
   acquiring at least one line impedance parameter,
   obtaining a fault type,
   adaptively obtaining a corrected apparent impedance dependent on the obtained fault type.

2. Method according to claim 1, wherein the current and voltage measurements are acquired locally, preferably at a relay, preferably at an inverter-based renewable resource, preferably at a point of coupling of an inverter-based renewable resource and a main grid.

3. Method according to any one of claims 1 or 2, wherein the fault type is a phase to ground fault, or a phase to phase fault, wherein the phase to phase fault comprises a phase to phase fault including ground or a phase to phase fault not including ground.

4. Method according to any one of claims 1 to 3, wherein the corrected apparent impedance is adaptively calculated dependent on a magnitude of a local zero sequence current.

5. Method according to claim 4, wherein
   if the fault type is a phase to ground fault, an angle of a fault current is calculated for calculating the corrected apparent impedance.

6. Method according to claim 5, wherein,

   if the fault type is a phase to ground fault and the magnitude of the local zero sequence current or voltage is above a predetermined threshold, the angle of the fault current is calculated using zero sequence current or voltage quantities, and
   if the fault type is a phase to ground fault and the magnitude of the local zero sequence current or voltage is below a predetermined threshold and if a magnitude of a negative sequence current is above a predetermined threshold, the angle of the fault current is calculated using negative sequence current or voltage quantities, and
   if the fault type is a phase to ground fault and the magnitude of the local zero sequence current is below a predetermined threshold and if a magnitude of a negative sequence current is below a predetermined threshold, the angle of the fault current is calculated using positive sequence quantities.

7. Method according to claim 6, wherein a non-homogeneity angle is calculated, and the corrected apparent impedance is calculated using the non-homogeneity angle.

8. Method according to any one of claims 4 to 7, wherein,
   if the fault type is a phase to phase fault, an angle of a fault current is calculated if the magnitude of the local zero sequence current is below a predetermined threshold, and the corrected apparent impedance is calculated using the angle of the fault current.

9. Method according to claim 8, wherein,

   if the fault type is a phase to phase fault and the magnitude of the local zero sequence current is above a predetermined threshold, the corrected apparent impedance is calculated using zero sequence quantities, and
   if the fault type is a phase to phase fault and the magnitude of the local zero sequence current is below a predetermined threshold and if a magnitude of a negative sequence current is above a predetermined threshold, the angle of the fault current is calculated using negative sequence quantities, and
   if the fault type is a phase to phase fault and the magnitude of the local zero sequence current is below a predetermined threshold and if a magnitude of a negative sequence current is below a predetermined threshold, the angle of the fault current is calculated using positive sequence quantities.

10. Method according to any one of claims 6 to 9, wherein a non-homogeneity angle is calculated using the angle of the fault current if the magnitude of the local zero sequence current is below a predetermined threshold, and the corrected apparent impedance is calculated using the non-homogeneity angle.

11. Method according to claim 10, wherein the non-homogeneity angle is an angle of deviation between an angle of a local current and the angle of the fault current, wherein the local current is preferably a relay current depending on a fault loop.

12. Device for adaptively obtaining a corrected apparent impedance, wherein the device comprises a processor configured to perform the method according to any one of claims 1 to 11.

13. System for adaptively obtaining a corrected apparent impedance comprising a device according to claim 12 and an intelligent electronic device, IED, connected to the device.

14. System according to claim 13, wherein the IED is connected to a power grid comprising inverter-based renewable, IBR, energy sources.

**Fig. 1**

**Fig. 2**

**Fig. 3A**

**Fig. 3B**

**Fig. 4**

**Fig. 5**

**Fig. 6**

**Fig. 7A**

Acquisition of voltage and current measurements, line
impedance parameters — 201

Input identified fault type from phase selection element — 202

$|I_0|>\epsilon$

No

205

Yes

203

Calculate
$Z_{app}^{corr}$ using
expression in
table 2

$|I_2|>\Delta$

No

Calculate
$\angle I_F$ using
expression
in table 2

Yes

Calculate
$\angle I_F$ using
expression
in table 2 — 204

Estimate $\gamma$ using expression in table 2 — 207

Calculate $Z_{app}^{corr}$ using expression in table 2 — 208

**Fig. 7B**

Europäisches
Patentamt

European
Patent Office

Office européen
des brevets

# EUROPEAN SEARCH REPORT

Application Number

**EP 23 17 8754**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/021878 A1 (SAHA MURARI [SE] ET AL) 22 January 2009 (2009-01-22) * abstract * * figures 1-2 * * paragraph [0033] – paragraph [0034] * * paragraph [0041] – paragraph [0043] * * claims 1,3 * ----- | 1-14 | INV. H02H3/40 |
| X | MISHRA PRIYANKA ET AL: "Adaptive Distance Relaying for Distribution Lines Connecting Inverter-Interfaced Solar PV Plant", IEEE TRANSACTIONS ON INDUSTRIAL ELECTRONICS, IEEE SERVICE CENTER, PISCATAWAY, NJ, USA, vol. 68, no. 3, 26 February 2020 (2020-02-26), pages 2300-2309, XP011821871, ISSN: 0278-0046, DOI: 10.1109/TIE.2020.2975462 [retrieved on 2020-11-25] * abstract * * the whole document * ----- | 1-14 | |
| A | US 2022/308103 A1 (KASZTENNY BOGDAN Z [CA]) 29 September 2022 (2022-09-29) * figures 1, 4A * * paragraphs [0061], [0070] * ----- | 1-14 | TECHNICAL FIELDS SEARCHED (IPC) H02H |

The present search report has been drawn up for all claims

| Place of search | Date of completion of the search | Examiner |
|---|---|---|
| Munich | 23 November 2023 | Operti, Antonio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .........................................................................
& : member of the same patent family, corresponding
    document

EPO FORM 1503 03.82 (P04C01)

**EP 4 456 359 A1**

## ANNEX TO THE EUROPEAN SEARCH REPORT
## ON EUROPEAN PATENT APPLICATION NO.

EP 23 17 8754

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2023

| Patent document cited in search report | | Publication date | Patent family member(s) | | Publication date |
|---|---|---|---|---|---|
| US 2009021878 | A1 | 22-01-2009 | CN | 101336503 A | 31-12-2008 |
| | | | EP | 1982395 A1 | 22-10-2008 |
| | | | US | 2009021878 A1 | 22-01-2009 |
| | | | WO | 2007090484 A1 | 16-08-2007 |
| US 2022308103 | A1 | 29-09-2022 | EP | 4064488 A1 | 28-09-2022 |
| | | | US | 2022308103 A1 | 29-09-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Renewables 2021, IEA,* 2021
- **NEETHU GEORGE ; O. D. NAIDU.** Distance Protection Issues with Renewable Power Generators and Possible Solutions. *16th International Conference on Developments in Power System Protection (DPSP 2022),* March 2022, 1-6
- Line distance protection REL670 Version 2.2 ANSI Application Manual. ABB, 2018
- **Y. LIANG ; Z. LU ; W. LI ; W. ZHA ; Y. HUO.** A novel fault impedance calculation method for distance protection against fault resistance. *IEEE Trans. Power Del.,* February 2020, vol. 35 (1), 396-407
- **J. MA ; W. MA ; Y. QIU ; J. S. THORP.** An adaptive distance protection scheme based on the voltage drop equation. *IEEE Trans. Power Del.,* August 2015, vol. 30 (4), 1931-1940

- **A. HOOSHYAR ; M. A. AZZOUZ ; E. F. EI-SAADANY.** Distance protection of lines connected to induction generator-based wind farms during balanced faults. *IEEE Trans. Sustain. Energy,* October 2014, vol. 5 (4), 1193-1203
- **A. HOOSHYAR ; M. A. AZZOUZ ; E. F. EI-SAADANY.** Distance protection of lines emanating from full-scale converter-interfaced renewable energy power plants-Part II: Solution description and evaluation. *IEEE Trans. Power Del.,* August 2015, vol. 30 (4), 1781-1791
- **A. BANAIEMOQADAM ; A. HOOSHYAR ; M. A. AZZOUZ.** A control-based solution for distance protection of lines connected to converter-interfaced sources during asymmetrical faults. *IEEE Trans. Power Del.,* June 2020, vol. 35 (3), 1455-1466